# EUROPEAN PATENT SPECIFICATION

(11) **EP 3 054 248 B1**
(45) Date of publication and mention of the grant of the patent: **26.12.2018**
(21) Application number: 15153910.3
(22) Date of filing: 05.02.2015
(51) Int. Cl.: F28D 1/02, C12G 1/028, F28D 21/00

(54) **AN APPARATUS FOR CONTROLLING THE TEMPERATURE OF FOOD LIQUIDS**
VORRICHTUNG ZUR STEUERUNG DER TEMPERATUR VON FLÜSSIGEN NAHRUNGSMITTELN
APPAREIL PERMETTANT DE RÉGULER LA TEMPÉRATURE DE DENRÉES ALIMENTAIRES LIQUIDES

(43) Date of publication of application: 10.08.2016
(73) Proprietor: Sierra S.p.A., 37063 Isola Della Scala (VR) (IT)
(72) Inventor: Riello, Valerio Giordano, 37045 Legnago VR (IT)
(74) Representative: Studio Torta S.p.A.

(56) References cited:
- FR-A- 360 257
- FR-A- 674 692
- FR-A1- 2 194 774
- US-A1- 2004 149 422

## Description

### Field of the invention

The present invention relates to the field of controlling the temperature of food liquids, particularly for controlling the temperature of wine must during winemaking.

### Background of the invention

Control of the temperature of food liquids is important in the food industry, for example wineries and breweries.

During winemaking the grapes are crushed into a mixture of liquid and solids, which includes the skins, pulp and seeds, commonly known as must. After crushing, the wine must is transferred into tanks where the fermentation is performed. During the fermentation process, it is important to control the temperature of the must because the temperature of the must has an impact on the quality of the wine. Controlling the temperature of the must is difficult due to the large volume of must stored in the tanks.

It is known to provide stainless steel tanks with side walls through which fluid may be circulated - cool liquid to chill the contents of the tank and warm liquid to heat the contents. However, the rate of heat transfer into the liquid from a surrounding wall is quite low.

Therefore, there is a need for a reliable, effective and efficient apparatus to control the temperature of food liquids.

FR-A-2194774 and FR-A-674692 disclose an apparatus for controlling the temperature of a food liquid of the type according to the preamble of claim 1.

### Summary of the invention

The present invention relates to an apparatus for controlling temperature of a food liquid according to claim 1.

### Brief description of the drawings

The present invention will now be described in more detail hereinafter with reference to the accompanying drawings, in which some embodiments of the invention are shown.
FIG. 1 is a schematic view of an apparatus according to a first embodiment of the present invention,
FIG. 2 is a schematic view of the tank of the apparatus of FIG. 1,

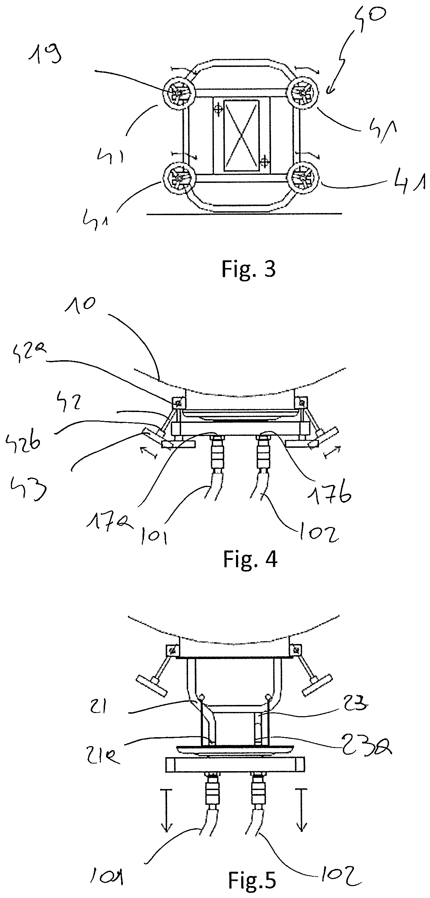

FIGS. 3-5 are schematic views of the tank of FIG. 2 during disengagement of a door and a heat exchanger from the tank,
FIG. 6 is a schematic view of the tank of the apparatus of FIG. 1 according to a second embodiment of the present invention,
FIG. 7 is a schematic view of the tank of the apparatus of FIG. 1 according to a third embodiment of the present invention.

### Detailed description

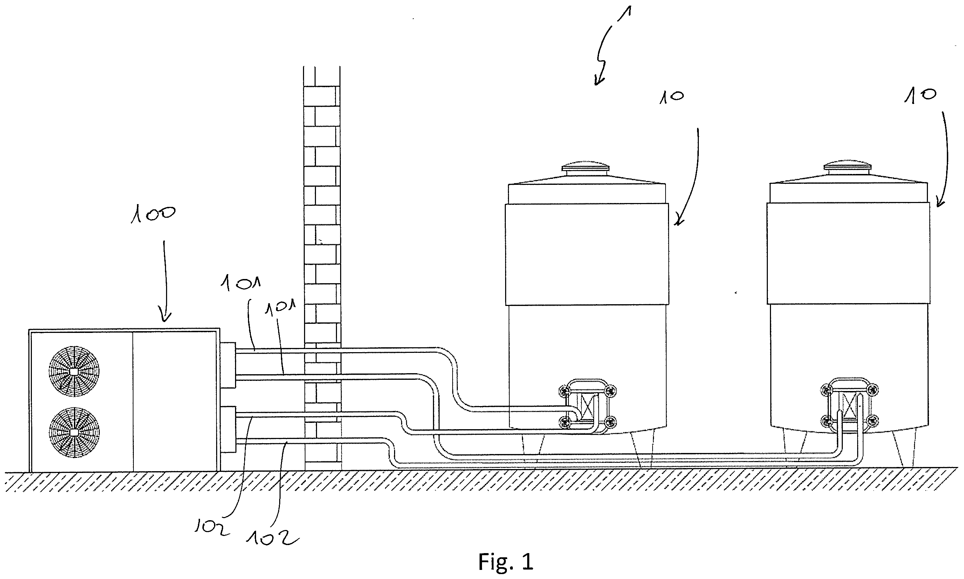

Figures 1 shows an apparatus 1 for controlling the temperature of a food liquid.

The apparatus 1 comprises at least one tank 10, in the example two tanks 10, each tank 10 for storing a food liquid and a heat exchanger 20 arranged in the tank 10 for heating and cooling the food liquid stored in the tank 10.

Hereinafter, reference will be made in a non limiting manner to one tank 10.

The heat exchanger 20 comprises an inlet duct 21, a coil portion 22 and an outlet duct 23.

A heat pump equipment 100 is connected with the heat exchanger 20 to supply heated or refrigerated fluid to the heat exchanger 20 to perform heat exchange with the food liquid stored in the tank 10 and respectively for heating and cooling the food liquid stored in the tank 10.

The heat pump equipment 100 has an outlet manifold 101 connected with the inlet duct 21 and an inlet manifold 102 connected with the outlet duct 23.

The fluid supplied by the heat pump equipment 100 enters the inlet duct 21, flows through the coil portion 22 to heat or cool the portion of the food liquid stored in the tank 10 and proximate to the coil portion 22 and then is discharged through the outlet duct 23.

A control unit (not shown in the figures) is connected with the heat pump equipment 100 to control the operation of the heat pump equipment 100 and the temperature of the fluid supplied by the heat pump equipment 100.

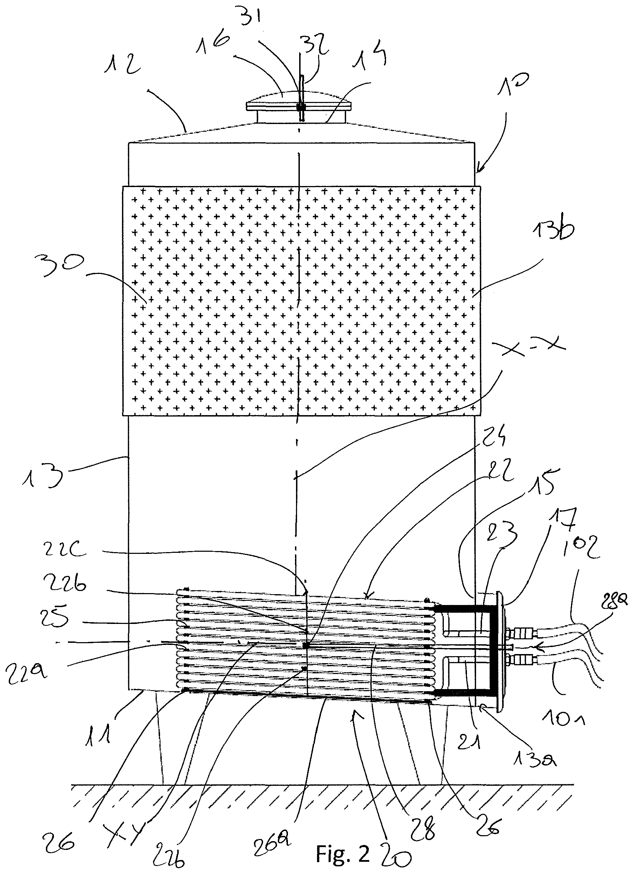

With reference to the embodiment of FIG. 2, the tank 10 comprises a base wall 11, a top wall 12 and a side wall 13 extending between the base wall 11 and the top wall 12 along a longitudinal direction X-X. This tank 10 is used for fermentation processes.

An upper opening 14 is formed in the top wall 12 and a lower opening 15 is formed in a lower portion 13a of the side wall 13.

The upper opening 14 is configured for loading the food liquid in the tank 10 and the lower opening 14 is configured for unloading the food liquid from the tank 10.

Preferably, the upper opening 14 is formed in a centre portion 14a of the top wall 12.

The tank 10 comprises an upper door 16 for closing and opening the upper opening 14 and a lower door 17 for closing and opening the lower opening 15.

In a different embodiment not shown in the figures, tank 10 is open on the top and the side wall 13 ends with a free edge defining the upper opening 14. With this embodiment, the tank 10 comprises a lid floating on the food liquid stored in the tank 10 and sealing the food liquid from the outside environment. This tank is used for storage of food liquids.

Preferably, the upper door 16 is hinged to the top wall 12 to move between a closed and an open configuration for closing and opening the upper opening 14.

The lower door 17 is removably attached to a lower portion 13a of the side wall 13 to move between a closed and an open configuration for closing and opening the lower opening 15.

In particular, the lower door 17 is removably attached to the lower portion 13a of the side wall 13 through attachment means 40. The attachment means 40 are configured to allow full disengagement of the lower door 17 from the tank 10 for opening the lower opening 15.

Preferably, the attachment means 40 comprise a plurality of attachment members 41.

Each attachment member 41 is hinged to the tank 10 around the lower opening 15 and can be removably attached to the lower door 17 for allowing the lower door 17 to open and close the lower opening 15.

More preferably, each attachment member 41 comprises a rod 42 hinged to the tank 10 and a knob 43 screwed on an end portion 42b of the rod 42 opposite to the end portion 42a hinged to the tank 10. The lower door 17 comprises a plurality of slits 19. Each rod 42 passes through a respective slit 19 and the knob 43 is configured to be screwed on the rod 42 to engage and push the lower door 17 towards the lower opening 15 to close the lower opening 15.

According to one embodiment, each slit 19 has a side opening to allow the rod 42 to be moved in and from the slit 19 upon rotating the rod 42 relative to the hinge point with the tank 10.

The inlet duct 21 and the outlet duct 23 pass through the lower door 17 and are firmly attached thereto.

The coil portion 22 of the heat exchanger 20 is configured to pass through the lower opening 15 to allow the heat exchanger 20 to be put in the tank 10 and pulled out from the tank 10 upon disengaging the lower door 17 from the tank 10 and moving the lower door 17 and the heat exchanger 20 along a transverse direction Y-Y, transversal to the longitudinal direction X-X. This arrangement allows to heat or cool the food liquid down to the bottom of the tank 10, defined by the base wall 11 even when the tank 10 is half filled. Moreover, this arrangement can be implemented in existing tanks with minor modifications of attachment means of the lower door with the tank.

According to one embodiment, two apertures 17a, 17b are formed in the lower door 17 respectively for passage of the inlet duct 21 and the outlet duct 23. According to an alternative embodiment, one aperture may be formed in the lower door 17 for passage of the inlet duct 21 and the outlet duct 23. Hereinafter, reference will be made in a non limiting manner to the embodiment shown in the figures with two apertures 17a, 17b.

Preferably, the lower door 17 comprises watertight members (not shown in the figures) configured to allow passage of the inlet duct 21 and the outlet duct 23 through the apertures 17a,17b and to seal said apertures 17a,17b.

More preferably, the inlet duct 21 and the outlet duct 23 terminate with respective inlet and outlet manifolds 21a, 23a which are connected respectively with the outlet and inlet manifolds 101,102 of the heat pump equipment 100.

According to one embodiment, the side wall 13 of the tank 10 has a side cooling portion 13b. The side cooling portion 13b extends longitudinally between a height h1 and a height h2, measured longitudinally from the base wall 11. In particular, h1 is equal to or greater than H/2, where H is the height H of the tank 10 measure longitudinally between the base wall 11 and the top wall 12.

Preferably, the tank 10 comprises a cooling band 30 arranged around the side cooling portion 13b. For example, the cooling band 30 is obtained through an annular cavity formed in the side cooling portion 13b of the side wall 13. The liquid flowing through the cooling band may be supplied by the heat pump equipment 100 or another equipment.

Preferably, the tank 10 comprises a CO₂ sensor 31 arranged in the top wall 12 and configured to detect the CO₂ generated into the tank 10. The CO₂ sensor 31 is positioned in a pipe 32 passing through the upper door 16 and in fluid communication with the tank 10.

According to one embodiment, the heat exchanger 20 comprises a temperature probe 24 fixed to the coil portion 22. The temperature probe 24 is configured to detect the temperature of the liquid. In particular, the coil portion 22 comprises a plurality of coils 22a, each coil 22a having a centre 22b. The plurality of centres 22b of the coils 22a are arranged along a centre line 22c extending along the longitudinal direction X-X.

Preferably, the temperature probe 24 is positioned along the centre line 22c. More preferably, the temperature probe 24 is positioned longitudinally in the middle of the centre line 22c, that is in the middle of the coil portion 22.

According to one embodiment, the heat exchanger 20 comprises a support frame 25 configured to support the coil portion 22.

The support frame 25 comprises a base portion 26 leaning on the base wall 11.

Preferably, the base portion 26 is configured to allow the coil portion 22 to slide on the base wall 11 along the transverse direction Y-Y when the heat exchanger 20 is put in the tank 10 and/or pulled out from the tank 10.

According to the embodiment of FIG. 2, the base portion 26 defines a sliding surface 26a in contact with the base wall 11 and made of a frictionless polymer material, preferably PTFE.

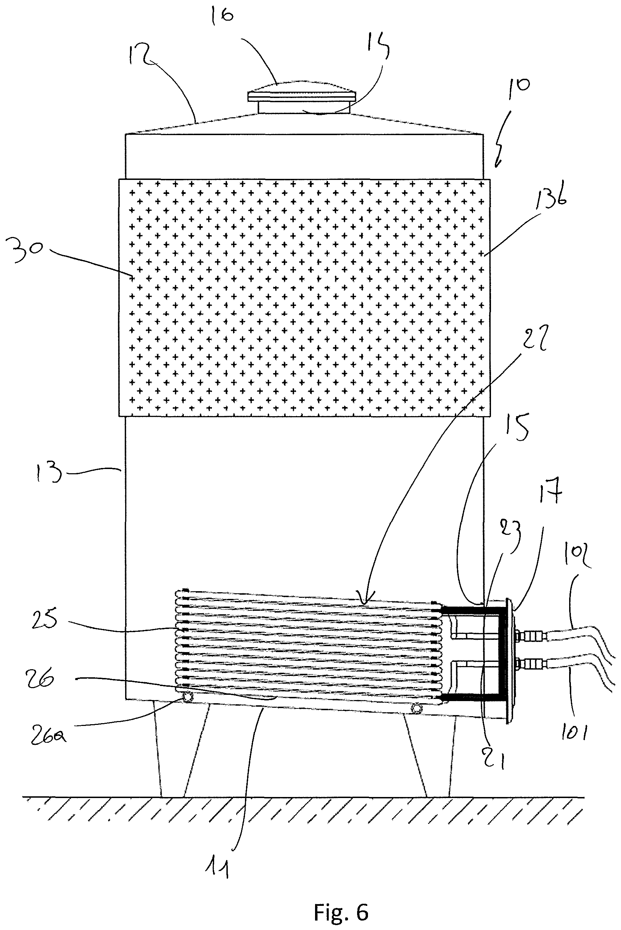

According to the embodiment of FIG. 6, the base portion 26 comprises a plurality of wheels 26a (FIG. 6).

More preferably, the inner frame 26 is made of stainless steel.

According to one embodiment, a pipe 28 is fixed to the support frame 26. The pipe 28 extends between the support frame 26 and the lower door 17. A probe line 28a is arranged inside the pipe 28 and is connected with the temperature probe 24 to connect the temperature probe 24 with the control unit in order to provide the control unit with a temperature signal representative of the temperature detected by the temperature probe 24. Preferably, the pipe 28 is watertight coupled with the lower door 17.

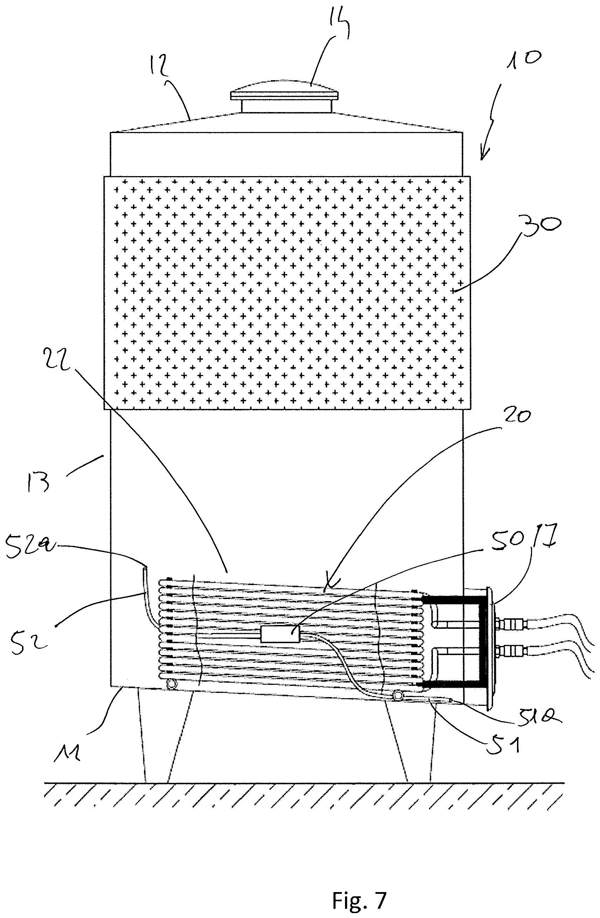

According to the embodiment of FIG. 7, a submerged pump 50 is arranged in the tank 10. The submerged pump 50 comprises a suction duct 51 with a suction inlet 51a and a delivery duct 52 with a delivery outlet 52a. The suction inlet 51a is arranged proximate to the base wall 11 and the delivery outlet 52a is arranged in a position longitudinally above the suction inlet 51a. With this arrangement, the submerged pump 50 sucks liquid from the bottom of the tank 10 and discharges this liquid on a higher level of the liquid stored in the tank 10 thereby mixing the bottom liquid with the top liquid.

## Claims

1. An apparatus (1) for controlling the temperature of a food liquid, comprising:
- a tank (10) for storing a food liquid,
- a heat exchanger (20) arranged in said tank (10),
- a heat pump equipment (100) connected with said heat exchanger (20) and configured to supply a heated or refrigerated fluid,
wherein:
said tank (10) comprises:
- a base wall (11),
- a side wall (13) extending from said base wall (11) along a longitudinal direction (X-X),
- a lower opening (15) formed in a lower portion (13a) of said side wall (13),
- an upper opening (14),
- a lower door (17) for closing and opening said lower opening (15),
said heat exchanger (20) comprises:
- an inlet duct (21) configured to receive the fluid supplied by said heat pump equipment (100),
- a coil portion (22) connected to said inlet duct (21) and configured to allow heat exchange between said fluid and the food liquid stored in the tank (10),
- an outlet duct (23) connected to said coil portion (23) and configured to deliver the fluid coming from the coil portion (22) to the heat pump equipment (100),
**characterized in that**
- said lower door (17) is removably attached to said tank (10) through attachment means (40) that are configured to allow full disengagement of said lower door (17) from said tank (10) for opening said lower opening (15),
- said inlet duct (21) and said outlet duct (23) pass through said lower door (17) and are firmly attached to said lower door (17),
- said coil portion (22) is configured to pass through said lower opening (15) to allow said heat exchanger (20) to be put in said tank (10) and pulled out from said tank (10) upon disengaging said lower door (17) from said tank (10) and moving said lower door (17) and the heat exchanger (20) along a transverse direction (Y-Y), transversal to said longitudinal direction (X-X).

2. The apparatus (1) according to claim 1, wherein:
- said attachment means (40) comprise a plurality of attachment members (41),
- each attachment member (41) is hinged to said tank (10) around said lower opening (15) and can be removably attached to said lower door (17) for allowing said lower door (17) to open and close said lower opening (15).

3. The apparatus (1) according to claim 2, wherein:
- each attachment member (41) comprises a rod (42) hinged to said tank (10) and a knob (43) screwed on said rod (42),
- said lower door (17) comprises a plurality of slits (19),
- each rod (42) passes through a respective slit (19) and said knob (43) is configured to be screwed on said rod (42) to engage and push said lower door (17) to close said lower opening (15).

4. The apparatus (1) according to any of claims 1 to 3, wherein:
- said heat exchanger (20) comprises a support frame (25) configured to support the coil portion (22),
- said support frame (25) comprises a base portion (26) leaning on said base wall (11).

5. The apparatus (1) according to claim 4, wherein:
- said base portion (26) is configured to allow said coil portion (22) to slide on said base wall (11) along said transverse direction (Y-Y) when said heat exchanger (20) is put in said tank (10) and/or pulled out from said tank (10).

6. The apparatus (1) according to claim 5, wherein:
- said base portion (26) defines a sliding surface (26a) in contact with said base wall (11) and made of a frictionless polymer material, preferably PTFE.

7. The apparatus (1) according to claim 5, wherein:
- said base portion (26) comprises a plurality of wheels (26a).

8. The apparatus (1) according to any of claims 1 to 7, wherein:
- said tank (10) comprises a top wall (12),
- said side wall (13) extends between said base wall (11) and said top wall (12) along said longitudinal direction (X-X),
- said upper opening (14) is formed in said top wall (12),
- an upper door (16) is provided for closing and opening said upper opening (14).

## Patentansprüche

1. Vorrichtung (1) zum Steuern bzw. Regeln der Temperatur einer Nahrungsmittelflüssigkeit, umfassend:
- einen Tank (10) zum Aufbewahren einer Nahrungsmittelflüssigkeit,
- einen Wärmetauscher (20), der in dem Tank (10) angeordnet ist,
- eine Wärmepumpenanlage (100), die mit dem Wärmetauscher (20) verbunden ist und konfiguriert ist, ein erwärmtes oder gekühltes Fluid zuzuführen,
wobei:
der Tank (10) umfasst:
- eine Basiswand (11),
- eine Seitenwand (13), die sich von der Basiswand (11) entlang einer Längsrichtung (X-X) erstreckt,
- eine untere Öffnung (15), die in einem unteren Abschnitt (13a) der Seitenwand (13) ausgebildet ist,
- eine obere Öffnung (14),
- eine untere Tür (17) zum Schließen und Öffnen der unteren Öffnung (15), wobei der Wärmetauscher (20) umfasst:
- einen Einlasstrakt (21), der konfiguriert ist, das von der Wärmepumpenanlage (100) zugeführte Fluid aufzunehmen,
- einen Spulenabschnitt (22), der mit dem Einlasstrakt (21) verbunden ist und konfiguriert ist, einen Wärmeaustausch zwischen dem Fluid und der in dem Tank (10) aufbewahrten Nahrungsmittelflüssigkeit zu ermöglichen,
- einen Auslasstrakt (23), der mit dem Spulenabschnitt (23) verbunden ist und konfiguriert ist, das von dem Spulenabschnitt (22) kommende Fluid zu der Wärmepumpenanlage (100) zu liefern,
**dadurch gekennzeichnet, dass**
- die untere Tür (17) entfernbar an dem Tank (10) durch Anbringungsmittel (40) angebracht ist, die so konfiguriert sind, dass sie das vollständige Außereingriffbringen der unteren Tür (17) von dem Tank (10) zum Öffnen der unteren Öffnung (15) ermöglichen,
- der Einlasstrakt (21) und der Auslasstrakt (23) durch die untere Tür (17) verlaufen und fest an der unteren Tür (17) angebracht sind,
- der Spulenabschnitt (22) konfiguriert ist, durch die untere Öffnung (15) zu verlaufen, um zu ermöglichen, dass der Wärmetauscher (20) in den Tank (10) eingesetzt und aus dem Tank (10) herausgezogen wird, wenn die untere Tür (17) von dem Tank (10) außer Eingriff gebracht wird und die untere Tür (17) und der Wärmetauscher (20) entlang einer Querrichtung (Y-Y) quer zu der Längsrichtung (X-X) bewegt werden.

2. Vorrichtung (1) nach Anspruch 1, wobei:
- die Anbringungsmittel (40) eine Mehrzahl von Anbringungsgliedern (41) umfassen,
- jedes Anbringungsglied (41) an den Behälter (10) um die untere Öffnung (15) herum angelenkt ist und entfernbar an der unteren Tür (17) angebracht sein kann, um der unteren Tür (17) zu ermöglichen, die untere Öffnung (15) zu öffnen und zu schließen.

3. Vorrichtung (1) nach Anspruch 2, wobei
- jedes Anbringungsglied (41) eine Stange (42), die an dem Behälter (10) angelenkt ist, und einen Knopf (43) umfasst, der auf die Stange (42) geschraubt ist,
- die untere Tür (17) eine Mehrzahl von Schlitzen (19) umfasst,
- jede Stange (42) durch einen jeweiligen Schlitz (19) verläuft und der Knopf (43) konfiguriert ist, auf die Stange (42) geschraubt zu sein, um die untere Tür (17) in Eingriff zu bringen und zu drücken, um die untere Öffnung (15) zu schließen.

4. Vorrichtung (1) nach einem der Ansprüche 1 bis 3, wobei
- der Wärmetauscher (20) einen Stütz- bzw. Trägerrahmen (25) umfasst, der konfiguriert ist, den Spulenabschnitt (22) zu stützen bzw. zu tragen;
- der Trägerrahmen (25) einen Basisabschnitt (26) umfasst, der an der Basiswand (11) lehnt.

5. Vorrichtung (1) nach Anspruch 4, wobei
- der Basisabschnitt (26) konfiguriert ist dem Spulenabschnitt (22) zu ermöglichen, an der Basiswand (11) entlang der Querrichtung (Y-Y) zu gleiten, wenn der Wärmetauscher (20) in den Tank (10) eingesetzt wird und/oder aus dem Tank (10) herausgezogen wird.

6. Vorrichtung (1) nach Anspruch 5, wobei:
- der Basisabschnitt (26) eine Gleitfläche (26a) in Kontakt mit der Basiswand (11) definiert und aus einem reibungsfreien Polymermaterial, vorzugsweise PTFE besteht.

7. Vorrichtung (1) nach Anspruch 5, wobei
- der Basisabschnitt (26) eine Mehrzahl von Rädern (26a) umfasst.

8. Vorrichtung (1) nach einem der Ansprüche 1 bis 7, wobei
- der Tank (10) eine obere Wand (12) umfasst,
- sich die Seitenwand (13) zwischen der Basiswand (11) und der oberen Wand (12) entlang der Längsrichtung (X-X) erstreckt,
- die obere Öffnung (14) in der oberen Wand (12) ausgebildet ist,
- eine obere Tür (16) zum Schließen und Öffnen der oberen Öffnung (14) bereitgestellt ist.

## Revendications

1. Dispositif (1) pour contrôler la température d'un liquide alimentaire, comprenant :
- un réservoir (10) pour stocker un liquide alimentaire,
- un échangeur de chaleur (20) agencé dans ledit réservoir (10),
- un équipement de pompe à chaleur (100) relié au dit échangeur de chaleur (20) et configuré pour fournir un fluide chauffé ou réfrigéré,
dans lequel
ledit réservoir (10) comprend :
- une paroi de base (11),
- une paroi latérale (13) s'étendant à partir de ladite paroi de base (11) le long d'une direction longitudinale (X-X),
- une ouverture inférieure (15) formée dans une partie inférieure (13a) de ladite paroi latérale (13),
- une ouverture supérieure (14),
- une porte inférieure (17) pour fermer et ouvrir ladite ouverture inférieure (15),
ledit échangeur de chaleur (20) comprend :
- un conduit d'entrée (21) configuré pour recevoir le fluide alimenté par ledit équipement de pompe à chaleur (100),
- une partie de spire (22) reliée au dit conduit d'entrée (21) et configurée pour permettre un échange de chaleur entre ledit fluide et le liquide alimentaire stocké dans le réservoir (10)
- un conduit de sortie (23) relié à ladite partie de spire (23) et configuré pour fournir le fluide provenant de la partie de spire (22) à l'équipement de pompe à chaleur (100),
**caractérisé en ce que**
- ladite porte inférieure (17) est fixée de manière amovible au dit réservoir (10) par l'intermédiaire de moyens de fixation (40) qui sont configurés pour permettre un désengagement absolu de ladite porte inférieure (17) dudit réservoir (10) pour ouvrir ladite ouverture inférieure (15),
- ledit conduit d'entrée (21) et ledit conduit de sortie (23) passent à travers ladite porte inférieure (17) et sont solidement attachés à ladite porte inférieure (17),
- ladite partie de spire (22) est configurée pour passer à travers ladite ouverture inférieure (15) afin de permettre au dit échangeur de chaleur (20) d'être placé à l'intérieur dudit réservoir (10) et retiré dudit réservoir (10) lors du désengagement de ladite porte inférieure (17) dudit réservoir (10) et du déplacement de ladite porte inférieure (17) et de l'échangeur de chaleur (20) le long d'une direction transversale (Y-Y) transversale à ladite direction longitudinale (X-X).

2. Dispositif (1) selon la revendication 1, dans lequel :
- lesdits moyens de fixation (40) comprennent une pluralité d'éléments de fixation (41),
- chaque élément de fixation (41) est articulé au dit réservoir (10) autour de ladite ouverture inférieure (15) et peut être fixé de manière amovible à ladite porte inférieure (17) pour permettre à ladite porte inférieure (17) d'ouvrir et de fermer ladite ouverture inférieure (15).

3. Dispositif (1) selon la revendication 2, dans lequel :
- chaque élément de fixation (41) comprend une tige (42) articulée au dit réservoir (10) et un bouton (43) vissé sur ladite tige (42),
- ladite porte inférieure (17) comprend une pluralité de fentes (19),
- chaque tige (42) passe à travers une fente respective (19) et ledit bouton (43) est configuré de façon à être vissé sur ladite tige (42) pour entrer en prise avec et pousser ladite porte inférieure (17) afin de fermer ladite ouverture inférieure (15).

4. Dispositif (1) selon l'une quelconque des revendications 1 à 3, dans lequel :
- ledit échangeur de chaleur (20) comprend un cadre de support (25) configuré pour supporter la partie de spire (22),
- ledit cadre de support (25) comprend une partie de base (26) reposant sur ladite paroi de base (11).

5. Dispositif (1) selon la revendication 4, dans lequel :
- ladite partie de base (26) est configurée pour permettre à ladite partie de spire (22) de coulisser sur ladite paroi de base (11) le long de ladite direction transversale (Y-Y) quand ledit échangeur de chaleur (20) est placé à l'intérieur dudit réservoir (10) et/ou retiré dudit réservoir (10).

6. Dispositif (1) selon la revendication 5, dans lequel :
- ladite partie de base (26) définit une surface coulissante (26a) en contact avec ladite paroi de base (11) et réalisée à partir d'un matériau en polymère sans friction, de préférence du PTFE.

7. Dispositif (1) selon la revendication 5, dans lequel :
- ladite partie de base (26) comprend une pluralité de roues (26a).

8. Dispositif (1) selon l'une quelconque des revendications 1 à 7, dans lequel :
- ledit réservoir (10) comprend une paroi supérieure (12),
- ladite paroi latérale (13) s'étend entre ladite paroi de base (11) et ladite paroi supérieure (12) le long de ladite direction longitudinale (X-X),
- ladite ouverture supérieure (14) est formée dans ladite paroi supérieure (12),
- une porte supérieure (16) est fournie pour fermer et ouvrir ladite ouverture supérieure (14).
